(19) Europäisches Patentamt
European Patent Office
Office européen des brevets

(11) **EP 4 598 011 A1**

(12) **EUROPEAN PATENT APPLICATION**
published in accordance with Art. 153(4) EPC

(43) Date of publication:
**06.08.2025 Bulletin 2025/32**

(21) Application number: **23886156.1**

(22) Date of filing: **27.10.2023**

(51) International Patent Classification (IPC):
**H04N 13/236** (2018.01)   **H04N 13/332** (2018.01)
**H04N 25/704** (2023.01)   **H04N 23/67** (2023.01)
**H04N 23/54** (2023.01)   **H04N 23/55** (2023.01)
**H04N 13/322** (2018.01)

(52) Cooperative Patent Classification (CPC):
**H04N 13/236; H04N 13/322; H04N 13/332;
H04N 23/54; H04N 23/55; H04N 23/67;
H04N 25/704**

(86) International application number:
**PCT/KR2023/016927**

(87) International publication number:
**WO 2024/096460 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022   KR 20220142551
19.12.2022   KR 20220178365**

(71) Applicant: **Samsung Electronics Co., Ltd.
Suwon-si, Gyeonggi-do 16677 (KR)**

(72) Inventors:
• **JEON, Jina**
  **Suwon-si Gyeonggi-do 16677 (KR)**
• **SONG, Doukyoung**
  **Suwon-si Gyeonggi-do 16677 (KR)**
• **OH, Jiyoun**
  **Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE FOR ACQUIRING DISTANCE INFORMATION, AND OPERATION METHOD THEREOF**

(57)   An electronic device, according to one embodiment of the present disclosure, may comprise: a focus tunable lens; an image sensor for acquiring an image frame of light incident through the focus tunable lens; and at least one processor operatively connected to the focus tunable lens and the image sensor. The at least one processor may be configured to: acquire, through the image sensor, at least one or more image frames corresponding to respective at least one or more focal distances of the focus tunable lens; on the basis of the acquired at least one or more image frames, estimate a first focal distance corresponding to an object contained in the at least one or more image frames; and, on the basis of the estimated first focal distance, acquire information about the distance to the object.

FIG. 2A

EP 4 598 011 A1

## Description

[Technical Field]

Various embodiments of the disclosure relate to an electronic device and an operation method thereof to obtain distance information using an image sensor.

[Background Art]

Augmented reality (AR) or mixed reality (MR) may obtain distance information about objects positioned around through scene understanding and accordingly disposed virtual objects. Accordingly, scene understanding technology for recognizing the surrounding scene may of significance.

Conventionally, for scene understanding, distance information about objects positioned around may be obtained using a depth sensor or a plurality of stereo cameras, and the scene may be recognized accordingly.

[Detailed Description of the Invention]

[Technical Solution]

An electronic device according to an embodiment of the disclosure may comprise a focus-variable lens, an image sensor configured to obtain an image frame of light incident through the focus-variable lens, and at least one processor operatively connected to the focus-variable lens and the image sensor. The at least one processor may be configured to obtain at least one image frame respectively corresponding to at least one focal length of the focus-variable lens through the image sensor. The at least one processor may be configured to estimate a first focal length corresponding to an object included in the at least one image frame based on the obtained at least one image frame. The at least one processor may be configured to obtain distance information from the object based on the estimated first focal length.

An electronic device according to an embodiment of the disclosure may comprise a focus-variable lens and an image sensor obtaining an image frame of light incident through the focus-variable lens. The method for operating the electronic device according to an embodiment may comprise obtaining at least one image frame respectively corresponding to at least one focal length of the focus-variable lens through the image sensor. The method for operating the electronic device according to an embodiment may comprise estimating a first focal length corresponding to an object included in the at least one image frame based on the obtained at least one image frame. The method for operating the electronic device according to an embodiment may comprise obtaining distance information from the object based on the estimated first focal length.

A non-transitory computer-readable storage medium storing one or more programs according to an embodiment of the disclosure may comprise operating the electronic device according to an embodiment may comprise obtaining at least one image frame respectively corresponding to at least one focal length of the focus-variable lens through the image sensor, based on execution of an application. The storage medium according to an embodiment may comprise estimating a first focal length corresponding to an object included in the at least one image frame based on the obtained at least one image frame. The storage medium according to an embodiment may comprise obtaining distance information from the object based on the estimated first focal length.

[Brief Description of Drawings]

FIG. 1 is a block diagram illustrating an electronic device in a network environment according to an embodiment of the disclosure;

FIG. 2A is a block diagram illustrating an electronic device according to an embodiment of the disclosure;

FIG. 2B is a perspective view illustrating an internal configuration of a wearable device according to an embodiment of the disclosure;

FIG. 2C is an exploded perspective view illustrating a wearable device according to an embodiment of the disclosure;

FIG. 3A is an exploded perspective view illustrating a focus-variable lens according to an embodiment of the disclosure;

FIG. 3B illustrates a state of a focus-variable lens with no voltage applied according to an embodiment of the disclosure;

FIG. 3C illustrates a state of a focus-variable lens with a designated voltage applied according to an embodiment of the disclosure;

FIG. 4 is a view illustrating a distance from an object corresponding to a focal length of a focus-variable lens according to an embodiment of the disclosure;

FIG. 5 is a graph illustrating changes in refractive index with respect to input voltages of a focus-variable lens according to an embodiment of the disclosure;

FIG. 6 is a graph illustrating changes in distance from an object with respect to input voltages of a focus-variable lens according to an embodiment of the disclosure;

FIG. 7A is a view illustrating a front-focusing state of light passing through a focus-variable lens according to an embodiment of the disclosure;

FIG. 7B is a view illustrating a properly focused state of light passing through a focus-variable lens according to an embodiment of the disclosure;

FIG. 7C is a view illustrating a back-focusing state of light passing through a focus-variable lens according to an embodiment of the disclosure;

FIG. 8 illustrates an example of a distance map generated based on distance information about at least one object O1, O2, and O3 according to an embodiment of the disclosure; and

FIG. 9 is a flowchart illustrating a method for operating an electronic device according to an embodiment of the disclosure.

[Mode for Carrying out the Invention]

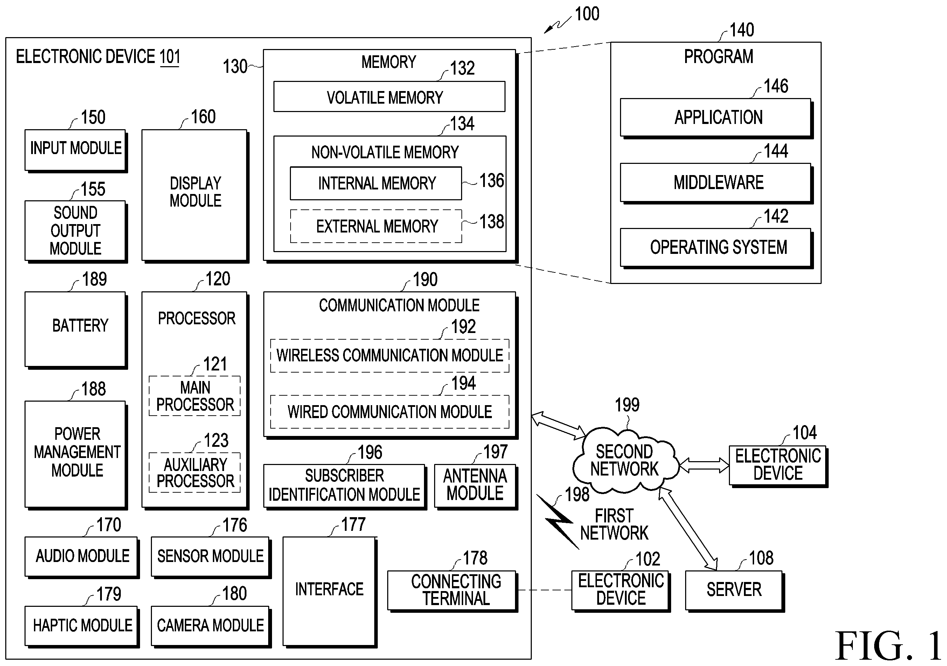

FIG. 1 is a block diagram illustrating an electronic device 101 in a network environment 100 according to an embodiment of the disclosure.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

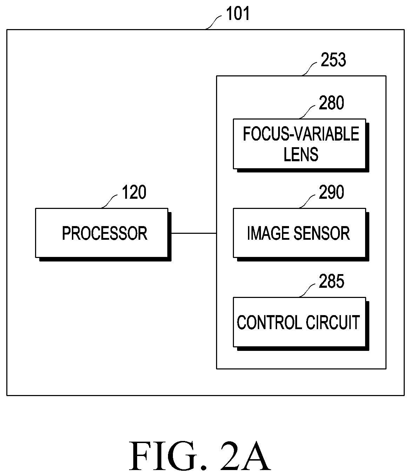

FIG. 2A is a block diagram illustrating an electronic device 101 according to an embodiment of the disclosure.

Referring to FIG. 2A, an electronic device 101 according to an embodiment may include a processor 120 and/or a second camera module 253 (e.g., the camera module 180 of FIG. 1). Here, the electronic device 101 may include all or at least some of the components of the electronic device 101 of FIG. 1.

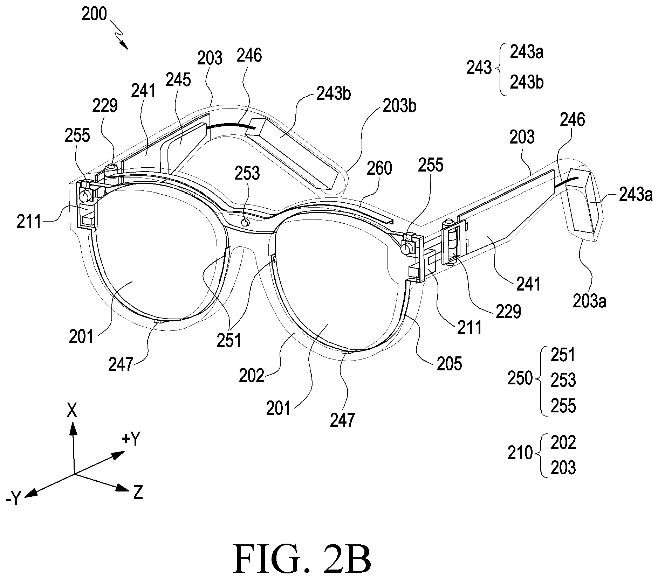

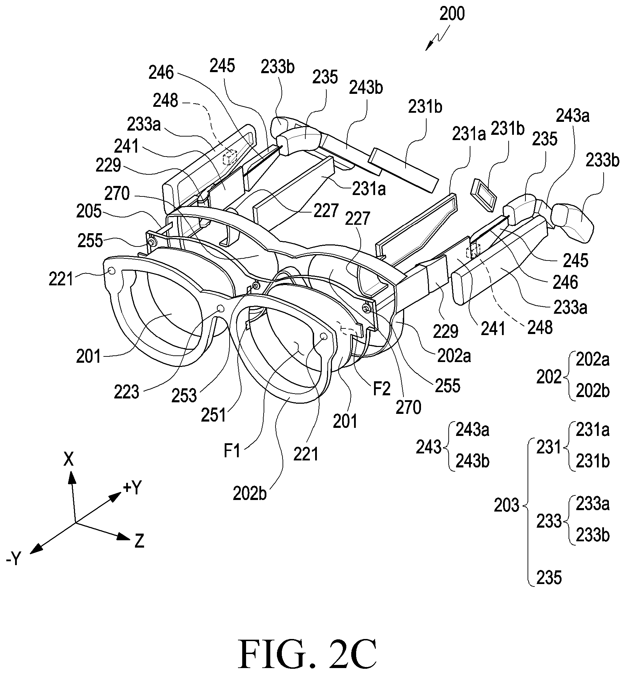

In an embodiment, the electronic device 101 may be optical see-through (OST)-type AR glasses (e.g., the wearable device 200 of FIGS. 2B and 2C) as described below, but is not limited thereto. In an embodiment, in the OST-type AR glasses, a display member (e.g., the display member 201 of FIGS. 2B and 2C) may be implemented as a transparent or translucent lens, so that the user may directly recognize the external environment through the transparent or translucent lens.

In an embodiment, the processor 120 may execute an application or command stored in memory (not shown) (e.g., the memory 130 of FIG. 1) or compute or process input data to output result data. In an embodiment, by controlling the operation of the second camera module 253, the processor 120 may perform an operation related to obtaining distance information and/or obtaining an image through the second camera module 253 to be described below.

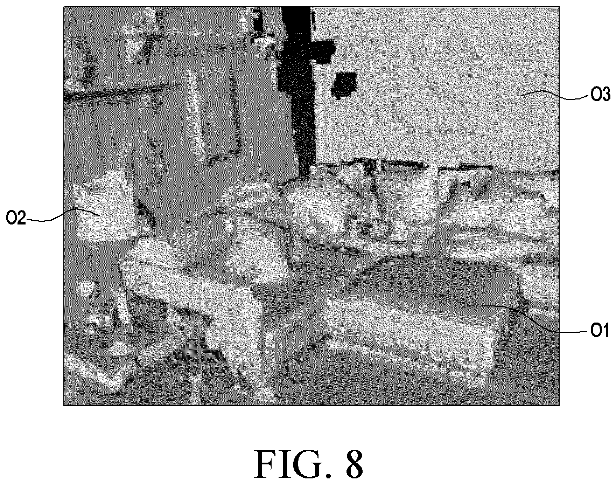

In the case of a conventional direct time-of-flight (dTOF) or indirect TOF (iTOF) sensor, as light of a specific wavelength emitted from a light source (e.g., a transmission (Tx) element) is reflected and received by an object (e.g., at least one object O1, O2, or O3 of FIG. 8), the time between the emission of the light and the reception of the light was measured to obtain the distance information between the electronic device and the object. However, in the case of the direct TOF (dTOF) or indirect TOF (iTOF) method, a separate mounting space is required, and the power consumption of the light source for light emission operation may be high (e.g., 500 [mW] or more including transmission (Tx) and reception (Rx)).

In order to reduce the mounting space and power consumption, a stereo camera (stereo camera) used for simulative localization and map-building (SLAM) purposes may be used to obtain distance information between the electronic device and the object, or generate a distance map. However, as the distance information is computed using the disparity between the left/right images captured by the stereo camera, power consumption may increase and, as the object for distance measurement goes far away, the accuracy of the distance information may be reduced, and the objects for distance measurement may be superposed.

In an embodiment, the second camera module 253 may include a focus-variable lens 280, an image sensor 290, and/or a control circuit 285. In an embodiment, the focus-variable lens 280 may be a tunable lens (T-lens) that has a shape changed, and refractive index and/or focal length variable by a change in input voltage or current.

In an embodiment, the image sensor 290 is a sensor that obtains an image frame of light incident through the focus-variable lens 280, and may obtain at least one image frame based on a designated capturing period, for example.

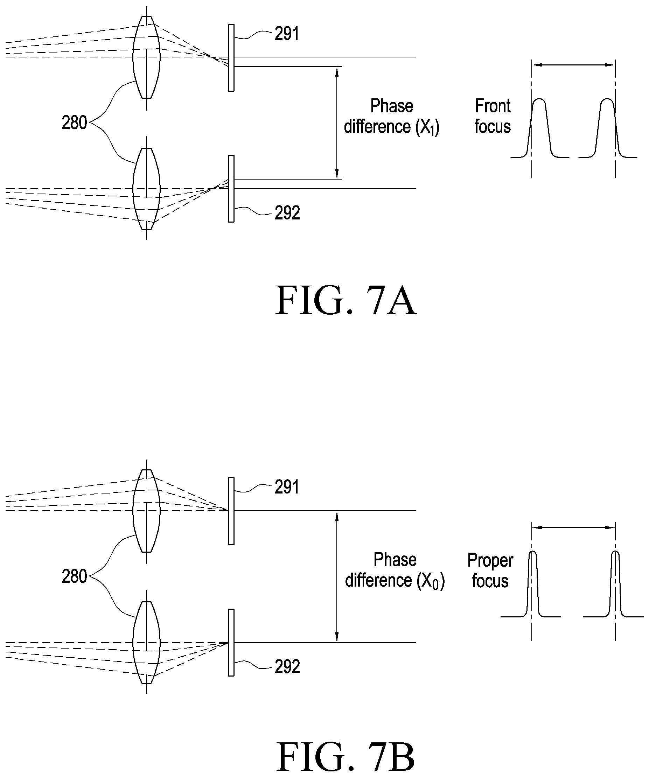

In an embodiment, the image sensor 290 may be a high-resolution RGB type for capturing an external image or video. The image sensor 290 is composed of at least one pixel, and each pixel has at least two or more photo diodes (e.g., the first photo diode 291 and the second photo diode 292 of FIG. 7A) and may be of a 2-PD (photo diode) type that receives data through each photo diode.

In an embodiment, when receiving an image acquisition signal, the image sensor 290 may obtain an image or video corresponding to the object. In an embodiment, the image sensor 290 may be a high-definition image sensor that obtains a high-quality image or video.

In an embodiment, the control circuit 285 may control the operation of the second camera module 253 by an operation signal of the processor 120. In an embodiment, the control circuit 285 may vary a voltage or a current input to the focus-variable lens 280. In an embodiment, the control circuit 285 may process data corresponding to at least one image frame obtained from the image sensor 290.

FIG. 2B is a perspective view illustrating an internal configuration of a wearable device 200 according to an embodiment of the disclosure. FIG. 2C is an exploded perspective view illustrating a wearable device 200 according to an embodiment of the disclosure.

Referring to FIGS. 2B and 2C, the wearable device 200 may be a glasses-type electronic device, and the user may visually recognize her surrounding objects or environment while wearing the wearable device 200. For example, the wearable device 200 may be a head-mounted device (HMD) or smart glasses capable of providing images directly in front of the user's eyes. The configuration of the wearable device 200 of FIGS. 2B and 2C may be identical in whole or at least part to the configuration of the electronic device 101 of FIG. 1.

According to an embodiment, the wearable device 200 may include a housing that forms the exterior of the wearable device 200. The housing 210 may provide a space in which components of the wearable device 200 may be disposed. For example, the housing 210 may include a lens image frame 202 and at least one wearing member 203.

According to an embodiment, the wearable device 200 may include a display member 201 capable of providing the user with visual information. For example, the display member 201 may include a module equipped with a lens or a second window member, a display, a waveguide, and/or a touch circuit. According to an embodiment, the display member 201 may be transparent or semi-transparent. According to an embodiment, the display member 201 may include a semi-transparent glass or a window member the light transmittance of which may be adjusted as the coloring concentration is adjusted. According to an embodiment, a pair of display members 201 may be provided and disposed to correspond to the user's left and right eyes, respectively, with the wearable device 200 worn on the user's body.

According to an embodiment, the lens image frame 202 may receive at least a portion of the display member 201. For example, the lens image frame 202 may surround at least a portion of the display member 201. According to an embodiment, the lens image frame 202 may position at least one of the display members 201 to correspond to the user's eye. According to an embodiment, the lens image frame 202 may be the rim of a normal eyeglass structure. According to an embodiment, the lens image frame 202 may include at least one closed loop surrounding the display devices 201.

According to an embodiment, the wearing members 203 may extend from the lens image frame 202. For example, the wearing members 203 may extend from ends of the lens image frame 202 and, together with the lens image frame 202, may be supported and/or positioned on a part (e.g., ears) of the user's body. According to an embodiment, the wearing members 203 may be rotatably coupled to the lens image frame 202 through hinge structures 229. According to an embodiment, the wearing member 203 may include an inner side surface 231c configured to face the user's body and an outer side surface 231d opposite to the inner side surface.

According to an embodiment, the wearable device 200 may include the hinge structures 229 configured to fold the wearing members 203 on the lens image frame 202. The hinge structure 229 may be disposed between the lens image frame 202 and the wearing member 203. While the wearable device 200 is not worn, the user may fold the wearing members 203 on the lens image frame 202 to carry or store the electronic device.

The wearable device 200 may include components received in the housing 210 (e.g., at least one circuit board 241 (e.g., printed circuit board (PCB), printed board assembly (PBA), flexible PCB, or rigid-flexible PCB (RFPCB)), at least one battery 243, at least one speaker module 245, at least one power transfer structure 246, and a camera module 250). The configuration of the housing 210 may include a lens image frame 202 and a wearing member 203.

According to an embodiment, the wearable device 200 may obtain and/or recognize a visual image regarding an object or environment in the direction (e.g., -Y direction) in which the wearable device 200 faces or the direction in which the user gazes, using the camera module 250 (e.g., the camera module 180 of FIG. 1) and may receive information regarding the object or environment from an external electronic device (e.g., the electronic device 102 or 104 or the server 108 of FIG. 1) through a network (e.g., the first network 198 or second network 199 of FIG. 1). In another embodiment, the wearable device 200 may provide the received object- or environment-related information, in the form of an audio or visual form, to the user. The wearable device 200 may provide the received object- or environment-related information, in a visual form, to the user through the display members 201, using the display module (e.g., the display module 160 of FIG. 1). For example, the wearable device 200 may implement augmented reality (AR) by implementing the object- or environment-related information in a visual form and combining it with an actual image of the user's surrounding environment.

According to an embodiment, the display member 201 may include a first surface F1 facing in a direction (e.g., -y direction) in which external light is incident and a second surface F2 facing in a direction (e.g., +y direction) opposite to the first surface F1. With the user wearing the wearable device 200, at least a portion of the light or image coming through the first surface F1 may be incident on the user's left eye and/or right eye through the second surface F2 of the display member 201 disposed to face the user's left eye and/or right eye.

According to an embodiment, the lens image frame 202 may include at least two or more image frames. For example, the lens image frame 202 may include a first image frame 202a and a second image frame 202b. According to an embodiment, when the user wears the wearable device 200, the first image frame 202a may be an image frame of the portion facing the user's face, and the second image frame 202b may be a portion of the lens image frame 202 spaced from the first image frame 202a in the gazing direction (e.g., -Y direction) in which the user gazes.

According to an embodiment, the light output module 211 may provide an image and/or video to the user. For example, the light output module 211 may include a display panel (not shown) capable of outputting images and a lens (not shown) corresponding to the user's eye and guiding images to the display member 201. For example, the user may obtain the image output from the display panel of the light output module 211 through the lens of the light output module 211. According to an embodiment, the light output module 211 may include a device configured to display various information. For example, the light output module 211 may include at least one of a liquid crystal display (LCD), a digital mirror device (DMD), a liquid crystal on silicon (LCoS), or an organic light emitting diode (OLED), or a micro light emitting diode (micro LED). According to an embodiment, when the light output module 211 and/or the display member 201 includes one of an LCD, a DMD, or an LCoS, the wearable device 200 may include a light output module 211 and/or a light source emitting light to the display area of the display member 201. According to another embodiment, when the light output module 211 and/or the display member 201 may include OLEDs or micro LEDs, the wearable device 200 may provide virtual images to the user without a separate light source.

According to an embodiment, at least a portion of the light output module 211 may be disposed in the housing 210. For example, the light output module 211 may be disposed in the wearing member 203 or the lens image frame 202 to correspond to each of the user's right eye and left eye. According to an embodiment, the light output module 211 may be connected to the display member 201 and may provide images to the user through the display member 201.

According to an embodiment, the circuit board 241 may include components for driving the wearable device 200. For example, the circuit board 241 may include at least one integrated circuit chip. Further, at least one of the processor 120, the memory 130, the power management module 188, or the communication module 190 of FIG. 1 may be provided in the integrated circuit chip. According to an embodiment, a circuit board 241 may be disposed in the wearing member 203 of the housing 210. According to an embodiment, the circuit board 241 may be electrically connected to the battery 243 through the power transfer structure 246. According to an embodiment, the circuit board 241 may be connected to the flexible printed circuit board 205 and may transfer electrical signals to the electronic components (e.g., the light output module 211, the camera module 250, and the light emitting unit) of the electronic device through the flexible printed circuit board 205. According to an embodiment, the circuit board 241 may be a circuit board including an interposer.

According to an embodiment, the flexible printed circuit board 205 may extend from the circuit board 241 through the hinge structure 229 to the inside of the lens image frame 202 and may be disposed in at least a portion of the inside of the lens image frame 202 around the display member 201.

According to an embodiment, the battery 243 (e.g., the battery 189 of FIG. 1) may be connected with components (e.g., the light output module 211, the circuit board 241, and the speaker module 245, the microphone module 247, and the camera module 250) of the wearable device 200 and may supply power to the components of the wearable device 200.

According to an embodiment, at least a portion of the battery 243 may be disposed in the wearing member 203. According to an embodiment, batteries 243 may be disposed in ends 203a and 203b of the wearing members 203. For example, the batteries 243 may include a first battery 243a disposed in a first end 203a of the wearing member 203 and a second battery 243b disposed in a second end 203b of the wearing member 203.

According to an embodiment, the speaker module 245 (e.g., the audio module 170 or the sound output module 155 of FIG. 1) may convert an electrical signal into sound. At least a portion of the speaker module 245 may be disposed in the wearing member 203 of the housing 210. According to an embodiment, the speaker module 245 may be located in the wearing member 203 to correspond to the user's ear. For example, the speaker module 245 may be disposed between the circuit board 241 and the battery 243.

According to an embodiment, the power transfer structure 246 may transfer the power from the battery 243 to an electronic component (e.g., the light output module 211) of the wearable device 200. For example, the power transfer structure 246 may be electrically connected to the battery 243 and/or the circuit board 241, and the circuit board 241 may transfer the power received through the power transfer structure 246 to the light output module 211. According to an embodiment, the power transfer structure 246 may be connected to the circuit board 241 through the speaker module 245. For example, when the wearable device 200 is viewed from a side (e.g., in the Z-axis direction), the power transfer structure 246 may at least partially overlap the speaker module 245.

According to an embodiment, the power transfer structure 246 may be a component capable of transferring power. For example, the power transfer structure 246 may include a flexible printed circuit board or wiring. For example, the wiring may include a plurality of cables (not shown). In various embodiments, various changes may be made to the shape of the power transfer structure 246 considering the number and/or type of the cables.

According to an embodiment, the microphone module 247 (e.g., the input module 150 and/or the audio module 170 of FIG. 1) may convert a sound into an electrical signal. According to an embodiment, the microphone module 247 may be disposed in at least a portion of the lens image frame 202. For example, at least one microphone module 247 may be disposed on a lower end (e.g., in the -X-axis direction) and/or on an upper end (e.g., in the X-axis direction) of the wearable device 200. According to an embodiment, the wearable device 200 may more clearly recognize the user's voice using voice information (e.g., sound) obtained by the at least one microphone module 247. For example, the wearable device 200 may distinguish the voice information from the ambient noise based on the obtained voice information and/or additional information (e.g., low-frequency vibration of the user's skin and bones). For example, the wearable device 200 may clearly recognize the user's voice and may perform a function of reducing ambient noise (e.g., noise canceling).

According to an embodiment, the camera module 250 may capture a still image and/or a video. The camera module 250 may include at least one of a lens, at least one image sensor, an image signal processor, or a flash. According to an embodiment, the camera module 250 may be disposed in the lens image frame 202 and may be disposed around the display member 201.

According to an embodiment, the camera module 250 may include at least one first camera module 251. According to an embodiment, the first camera module 251 may capture the trajectory of the user's eye (e.g., a pupil) or gaze. For example, the first camera module 251 may capture the reflection pattern of the light emitted by the light emitting unit (not shown) to the user's eyes. For example, the light emitting unit (not shown) may emit light in an infrared band for tracking the trajectory of the gaze using the first camera module 251. For example, the light emitting unit (not shown) may include an IR LED. According to an embodiment, the processor (e.g., the processor 120 of FIG. 1) may adjust the position of the virtual image so that the virtual image projected on the display member 201 corresponds to the direction in which the user's pupil gazes. According to an embodiment, the first camera module 251 may include a global shutter (GS)-type camera. It is possible to track the trajectory of the user's eyes or gaze using a plurality of third camera modules 251 having the same specifications and performance.

According to an embodiment, the first camera module 251 may periodically or aperiodically transmit information related to the trajectory of the user's eye or gaze (e.g., trajectory information) to the processor (e.g., the processor 120 of FIG. 1). According to another embodiment, when the first camera module 251 detects a change in the user's gaze based on the trajectory information (e.g., when the user's eyes move more than a reference value with the head positioned still), the first camera module 251 may transmit the trajectory information to the processor.

According to an embodiment, the camera modules 250 may include at least one second camera module 253. According to an embodiment, the second camera module 253 may capture an external image. According to an embodiment, the second camera module 253 may be a global shutter-type or rolling shutter (RS)-type camera. According to an embodiment, the second camera module 253 may capture an external image through the second optical hole 223 formed in the second image frame 202b. For example, the second camera module 253 may include a high-resolution color camera, and it may be a high resolution (HR) or photo video (PV) camera. Further, the second camera module 253 may provide an auto-focus (AF) function and an optical image stabilizer (OIS) function. The second camera module 253 according to an embodiment of the disclosure may include one or more cameras.

According to an embodiment, the wearable device 200 may include a flash (not shown) positioned adjacent to the second camera module 253. For example, the flash (not shown) may provide light for increasing brightness (e.g., illuminance) around the wearable device 200 when an external image is obtained by the second camera module 253, thereby reducing difficulty in obtaining an image due to the dark environment, the mixing of various light beams, and/or the reflection of light.

According to an embodiment, the camera modules 250 may include at least one third camera module 255. According to an embodiment, the third camera module 255 may capture the user's motion through a first optical hole 221 formed in the lens image frame 202. For example, the third camera module 255 may capture the user's gesture (e.g., hand gesture). Third camera modules 255 and/or first optical holes 221 may be disposed on two opposite sides of the lens image frame 202 (e.g., the second image frame 202b), e.g., formed in two opposite ends of the lens image frame 202 (e.g., the second image frame 202b) with respect to the X direction. According to an embodiment, the third camera module 255 may be a global shutter (GS)-type camera. For example, the third camera module 255 may be a camera supporting 3DoF (degrees of freedom) or 6DoF, which may provide position recognition and/or motion recognition in a 360-degree space (e.g., omni-directionally). According to an embodiment, the third camera modules 255 may be stereo cameras and may perform the functions of simultaneous localization and mapping (SLAM) and user motion recognition using a plurality of global shutter-type cameras with the same specifications and performance. According to an embodiment, the third camera module 255 may include an infrared (IR) camera (e.g., a time of flight (TOF) camera or a structured light camera). For example, the IR camera may be operated as at least a portion of a sensor module (e.g., the sensor module 176 of FIG. 1) for detecting a distance from the subject.

According to an embodiment, at least one of the first camera module 251 or the third camera module 255 may be replaced with a sensor module (e.g., the sensor module 176 of FIG. 1) (e.g., Lidar sensor). For example, the sensor module may include at least one of a vertical cavity surface emitting laser (VCSEL), an infrared sensor, and/or a photodiode. For example, the photodiode may include a positive intrinsic negative (PIN) photodiode or an avalanche photodiode (APD). The photodiode may be referred to as a photo detector or a photo sensor.

According to an embodiment, at least one of the first camera module 251, the second camera module 253, and the third camera module 255 may include a plurality of camera modules (not shown). For example, the second camera module 253 may be disposed on one surface (e.g., a surface facing in the -Y axis) of the wearable device 200. For example, the wearable device 200 may include a plurality of camera modules having different properties (e.g., angle of view) or functions and control to change the angle of view of the camera module based on the user's selection and/or trajectory information. At least one of the plurality of camera modules may be a wide-angle camera and at least another of the plurality of camera modules may form a telephoto camera.

According to an embodiment, the processor (e.g., processor 120 of FIG. 1) may determine the motion of the wearable device 200 and/or the user's motion using information for the wearable device 200 obtained using at least one of a gesture sensor, a gyro sensor, or an acceleration sensor of the sensor module (e.g., the sensor module 176 of FIG. 1) and the user's action (e.g., approach of the user's body to the wearable device 200) obtained using the first camera module 251. According to an embodiment, in addition to the above-described sensor, the wearable device 200 may include a magnetic (geomagnetic) sensor capable of measuring an orientation using a magnetic field and magnetic force lines and/or a hall sensor capable of obtaining motion information (e.g., moving direction or distance) using the strength of a magnetic field. For example, the processor may determine the motion of the wearable device 200 and/or the user's motion based on information obtained from the magnetic (geomagnetic) sensor and/or the hall sensor.

According to an embodiment, the wearable device 200 may perform an input function (e.g., a touch and/or pressure sensing function) capable of interacting with the user. For example, a component configured to perform a touch and/or pressure sensing function (e.g., a touch sensor and/or a pressure sensor) may be disposed in at least a portion of the wearing member 203. The wearable device 200 may control the virtual image output through the display member 201 based on the information obtained through the components. For example, a sensor associated with a touch and/or pressure sensing function may be configured in various types, e.g., a resistive type, a capacitive type, an electro-magnetic (EM) type, or an optical type. According to an embodiment, the component configured to perform the touch and/or pressure sensing function may be identical in whole or part to the configuration of the input module 150 of FIG. 1.

According to an embodiment, the wearable device 200 may including a reinforcing member 260 that is disposed in an inner space of the lens image frame 202 and formed to have a higher rigidity than that of the lens image frame 202.

According to an embodiment, the wearable device 200 may include a lens structure 270. The lens structure 270 may refract at least a portion of light. For example, the lens structure 270 may be a prescription lens having a predesignated refractive power. According to an embodiment, the lens structure 270 may be disposed behind (e.g., +Y direction) the second window member of the display member 201. For example, the lens structure 270 may be positioned between the display member 201 and the user's eye. For example, the lens structure 270 may face one surface of the display member.

According to an embodiment, the housing 210 may include a hinge cover 227 that may conceal a portion of the hinge structure 229. Another part of the hinge structure 229 may be received or hidden between an inner case 231 and an outer case 233, which are described below.

According to an embodiment, the wearing member 203 may include the inner case 231 and the outer case 233. The inner case 231 may be, e.g., a case configured to face the user's body or directly contact the user's body, and may be formed of a material having low thermal conductivity, e.g., a synthetic resin. According to an embodiment, the inner case 231 may include an inner side surface (e.g., the inner side surface 231c of FIG. 2A) facing the user's body. The outer case 233 may include, e.g., a material (e.g., a metal) capable of at least partially transferring heat and may be coupled to the inner case 231 to face each other. According to an embodiment, the outer case 233 may include an outer side surface (e.g., the outer side surface 231d of FIG. 2A) opposite to the inner side surface 331c. In an embodiment, at least one of the circuit board 241 or the speaker module 245 may be received in a space separated from the battery 243 in the wearing member 203. In the illustrated embodiment, the inner case 231 may include a first case 231a including the circuit board 241 or the speaker module 245 and a second case 231b receiving the battery 243, and the outer case 233 may include a third case 233a coupled to face the first case 231a and a fourth case 233b coupled to face the second case 231b. For example, the first case 231a and the third case 233a may be coupled (hereinafter, 'first case portions 231a and 233a') to receive the circuit board 241 and/or the speaker module 245, and the second case 231b and the fourth case 233b may be coupled (hereinafter, 'second case portions 231b and 233b') to receive the battery 343.

According to an embodiment, the first case portions 231a and 233a may be rotatably coupled to the lens image frame 202 through the hinge structure 229, and the second case portions 231b and 233b may be connected or mounted to the ends of the first case portions 231a and 233a through the connecting member 235. In some embodiments, a portion of the connecting member 235 in contact with the user's body may be formed of a material having low thermal conductivity, e.g., an elastic material, such as silicone, polyurethane, or rubber, and another portion thereof which does not come into contact with the user's body may be formed of a material having high thermal conductivity (e.g., a metal). For example, when heat is generated from the circuit board 241 or the battery 243, the connecting member 235 may block heat transfer to the portion in contact with the user's body while dissipating or discharging heat through the portion not in contact with the user's body. According to an embodiment, a portion of the connecting member 235 configured to come into contact with the user's body may be interpreted as a portion of the inner case 231, and a portion of the connecting member 235 that does not come into contact with the user's body may be interpreted as a portion of the outer case 233. According to an embodiment (not shown), the first case 231a and the second case 231b may be integrally configured without the connecting member 235, and the third case 233a and the fourth case 233b may be integrally configured without the connecting member 235. According to an embodiment, other components (e.g., the antenna module 197 of FIG. 1) may be further included in addition to the illustrated components, and information regarding an object or environment may be received from an external electronic device (e.g., the electronic device 102 or 104 or server 108 of FIG. 1) through a network (e.g., the first network 198 or second network 199 of FIG. 1) using the communication module 190.

Although only the wearable device 200 is illustrated and described in FIGS. 2A to 2C, the present invention is not limited thereto, and some components of the wearable device 200 illustrated in FIGS. 2A to 2C may be included in electronic devices, such as smartphones and tablet PCs.

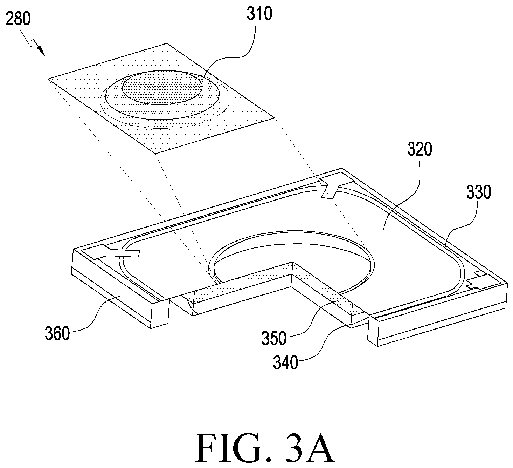

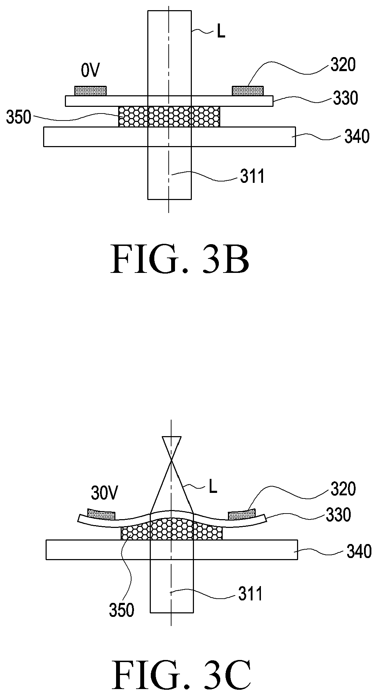

FIG. 3A is an exploded perspective view illustrating a focus-variable lens 280 according to an embodiment of the disclosure. FIG. 3B illustrates a state of a focus-variable lens 280 with no voltage applied according to an embodiment of the disclosure. FIG. 3C illustrates a state of a focus-variable lens 280 with a designated voltage applied according to an embodiment of the disclosure.

Referring to FIGS. 3A to 3C, in the focus-variable lens 280 according to an embodiment, the refractive index of the refractive area 310 may be changed based on a change in the voltage input to a piezo film 320.

In an embodiment, in the focus-variable lens 280, a transparent polymer optic fiber 350 may be disposed in the refractive area 310 to allow light L to pass therethrough, and a glass membrane 330 and a glass panel 340 may be disposed on one side and the other side, respectively, of the polymer optic fiber 350. For example, one surface of the polymer optic fiber 350 may contact the glass membrane 330 so that the surface may be deformed according to the deformation of the glass membrane 330, and the other surface of the polymer optic fiber 350 may contact the glass panel 340 to remain a flat plane without deformation on the surface.

In an embodiment, the glass membrane 330 and the glass panel 340 of the focus-variable lens 280 and the polymer optic fiber 350 having the upper and lower surfaces covered therewith may be surrounded by a silicon housing 360.

In an embodiment, the focus-variable lens 280 further includes a piezo film 320 disposed at a position in contact with the glass membrane 330, and physical deformation may occur in the piezo film 320 and the glass membrane 330 due to a change in the voltage applied to the piezo film 320, thereby changing the shape of the surface of the polymer optic fiber.

In an embodiment, as illustrated in FIG. 3B, in a state in which no voltage is applied to the piezo film 320, the shapes of the piezo film 320 and the glass membrane 330 are not changed, so that one surface and the other surface of the polymer optic fiber 350 may be in a flat state. Accordingly, the light L incident on the refractive area 310 of the focus-variable lens 280 may pass without refraction. Here, the light L incident perpendicular to the focus-variable lens 280 may pass through the focus-variable lens 280 parallel to the center line 311 of the focus-variable lens 280.

In an embodiment, as illustrated in FIG. 3C, in a state in which a designated voltage (e.g., 30 [V]) is applied to the piezo film 320, the shapes of the piezo film 320 and the glass membrane 330 may be changed, so that one surface of the polymer optic fiber 350 may be deformed. In an embodiment, one surface of the polymer optic fiber 350 has a shape in which the central portion protrudes convexly outward and the outer portion is concave inward, and may be transformed into a shape of a convex lens. Accordingly, light incident on the refractive area of the focus-variable lens 280 may be refracted inward (in the direction of the center line 311 of the focus-variable lens 380), so that the focal length may be relatively reduced.

When a focus-variable lens 280 having a refractive index and a focal length variable based on an input voltage according to an embodiment is used, an error (e.g., hysteresis) in focal length according to an input value may be small compared to a method of changing the physical focal length in a magnetic manner, and there may be no or little error in focal length corresponding to an input voltage. Therefore, it is possible to reduce errors by estimating the distance to the object using a method of varying the voltage input to the focus-variable lens 280.

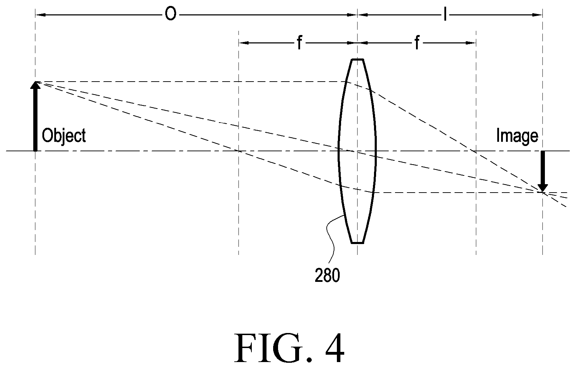

FIG. 4 is a view illustrating a distance from an object corresponding to a focal length f of a focus-variable lens 280 according to an embodiment of the disclosure.

Referring to FIG. 4, an electronic device (e.g., the electronic device 101 or processor 120 of FIG. 1) according to an embodiment may obtain distance information from an object in a state in which the light reflected by the object is focused corresponding to the object through an image sensor (e.g., the image sensor 290 of FIG. 2A) obtained through the focus-variable lens 280. Here, an operation of automatically adjusting the focus corresponding to the object is described below.

In an embodiment, the electronic device may estimate the distance O from the object by the following equation in a state in which the light reflected by the object is focused by varying the refractive index of the focus-variable lens 280 as described below.

[Equation 1]

$$\frac{1}{I} = \frac{1}{O} + \frac{1}{f}$$

Here, I is the image distance between the lens and the position where the image forms, O is the object distance between the lens and the object, and f is the focal length of the lens.

In an embodiment, the electronic device may estimate a ratio (PMAG=I/O) of the image distance to the object distance, which is a primary magnetization (PMAG) of the focus-variable lens 280.

In an embodiment, the electronic device may estimate the focal length f of the focus-variable lens 280 by varying the refractive index of the focus-variable lens 280 to an appropriate focal state for light reflected from the object, and obtain distance information from the object using the estimated focal length.

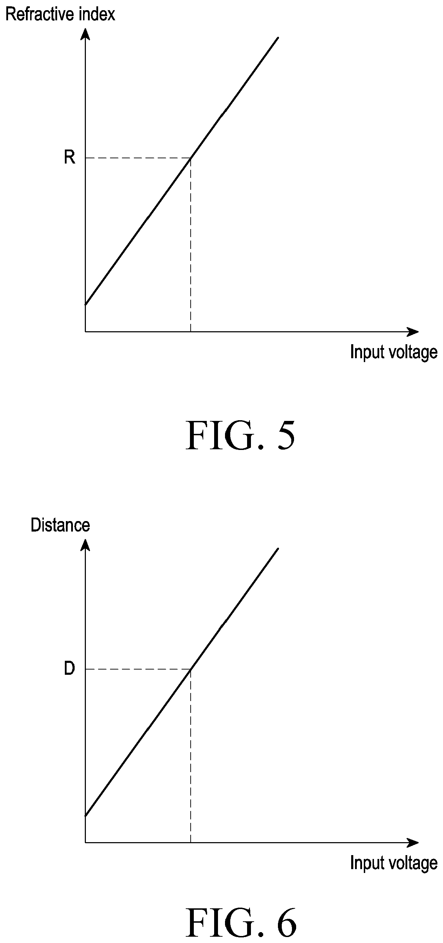

FIG. 5 is a graph illustrating changes in refractive index with respect to input voltages of a focus-variable lens according to an embodiment of the disclosure. FIG. 6 is a graph illustrating changes in distance from an object with respect to input voltages of a focus-variable lens according to an embodiment of the disclosure.

Referring to FIGS. 5 and 6, an electronic device (e.g., the electronic device 101 or the processor 120 of FIG. 1) according to an embodiment may store a graph regarding a refractive index corresponding to an input voltage of a focus-variable lens (e.g., the focus-variable lens 280 of FIG. 2A) and/or a distance from an object.

In an embodiment, the electronic device may pre-store the graph (or table) of the refractive index or focal length of the focus-variable lens, corresponding to the voltage or current input to the focus-variable lens, as shown in FIG. 5.

For example, data of the refractive index or focal length of the focus-variable lens according to the voltage or current input to the focus-variable lens may be pre-stored in memory when manufacturing the electronic device or focus-variable lens.

In an embodiment, when a voltage is input, the refractive index of the focus-variable lens may be varied at a constant ratio corresponding to each input voltage. In other words, the change in the refractive index with respect to the input voltage is constantly maintained, thereby reducing hysteresis.

In an embodiment, the electronic device may calibrate the refractive index or focal length of the focus-variable lens, corresponding to a voltage or current input to the focus-variable lens, according to a designated period or when the electronic device is initialized. For example, the electronic device may calibrate the refractive index or focal length of the focus-variable lens, corresponding to the designated distance information from the object, while automatically focusing on the object.

In an embodiment, the electronic device may pre-store a graph (or table) regarding the distance information from the object, corresponding to the voltage or current input to the focus-variable lens, as shown in FIG. 6. Here, the distance information from the object may be calculated in advance based on the focal length of the focus-variable lens corresponding to the voltage or current input to the focus-variable lens.

In an embodiment, the electronic device may obtain the distance information from the object according to the voltage input to the focus-variable lens based on the pre-stored distance information corresponding to the voltage or current input to the focus-variable lens.

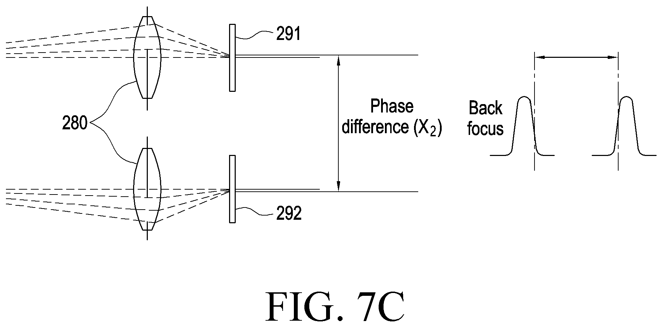

FIG. 7A is a view illustrating a front-focusing state of light passing through a focus-variable lens 280 according to an embodiment of the disclosure. FIG. 7B is a view illustrating a properly focused state of light passing through a focus-variable lens 280 according to an embodiment of the disclosure. FIG. 7C is a view illustrating a back-focusing state of light passing through a focus-variable lens 280 according to an embodiment of the disclosure.

Referring to FIGS. 7A, 7B, and 7C, an image sensor (e.g., the image sensor 290 of FIG. 2) according to an embodiment may include a first photo diode 291 and a second photo diode 292, and the first photo diode 291 and the second photo diode 292 may receive light incident through the focus-variable lens 280 to obtain image data.

In an embodiment, the electronic device (e.g., the electronic device 101 or the processor 120 of FIG. 1) may estimate a focal length corresponding to an object (e.g., at least one object O1, O2, or O3 of FIG. 8) based on a phase difference between the data obtained by the first photo diode 291 of the image sensor and the data obtained by the second photo diode 292. For example, as illustrated in FIGS. 7A, 7B, and 7C, the electronic device may obtain at least one image frame while varying the refractive index and/or focal length of the focus-variable lens 280, and identify a first image frame with the minimized phase difference and a first focal length corresponding thereto, based on the phase difference between the data corresponding to the obtained at least one image frame.

For example, as shown in FIG. 7A, in a front-focus state in which the light reflected by the object and passing through the focus-variable lens 280 is focused in front of the first photo diode 291 and the second photo diode 292, a phase difference X1 may occur between the data obtained by the first photo diode 291 and the data obtained by the second photo diode 292.

Further, as shown in FIG. 7C, in a back-focus state in which the light reflected by the object and passing through the focus-variable lens 280 is focused behind the first photo diode 291 and the second photo diode 292, a phase difference X2 may occur between the data obtained by the first photo diode 291 and the data obtained by the second photo diode 292.

As shown in FIG. 7B, in a properly focused state in which the light reflected by the object and passing through the focus-variable lens 280 is focused on the first photo diode 291 and the second photo diode 292, the phase difference X0 between the data obtained thereby may be removed.

In an embodiment, when obtaining a first image frame in which the phase difference between the data obtained by the first photo diode 291 and the second photo diode 292 is minimized, the electronic device may estimate a first focal length corresponding to the proper focus corresponding to the object based on a voltage or current input to the focus-variable lens 280. According to an embodiment, the electronic device may obtain the distance information from the object based on the first focal length.

FIG. 8 illustrates an example of a distance map generated based on distance information about at least one object O1, O2, and O3 according to an embodiment of the disclosure.

Referring to FIG. 8, the electronic device (e.g., the electronic device 101 or the processor 120 of FIG. 1) may obtain distance information from at least one object O1, O2, and O3 included in at least one image frame obtained through a focus-variable lens (e.g., the focus-variable lens 280 of FIG. 2A) and an image sensor (e.g., the image sensor 290 of FIG. 2A).

For example, when there are a plurality of objects O1, O2, and O3 in at least one image frame, the electronic device may obtain the distance information from the plurality of objects O1, O2, and O3. Here, the at least one object O1, O2, and O3 may be a specific object or a background around where the specific object is disposed.

In an embodiment, the electronic device may obtain the distance information from at least one object O1, O2, and O3 based on the light reflected by the at least one object O1, O2, and O3 and incident through the focus-variable lens, and generate a distance map based on the obtained distance information. In an embodiment, the electronic device may generate a distance map where distance information corresponding to each of the positions of one or more objects O1, O2, and O3 positioned within the field of view (FOV) is input.

In an embodiment, the electronic device may update the distance information from the at least one object O1, O2, and O3 based on a designated period (e.g., 1 [sec]). In an embodiment, the electronic device may obtain at least one image frame corresponding to each of at least one focal length of the focus-variable lens through the image sensor while varying the focal length of the focus-variable lens every designated period. The electronic device may estimate a first focal length corresponding to the at least one object O1, O2, and O3 based on the obtained at least one image frame, and update the distance information from each of the at least one object O1, O2, and O3 accordingly.

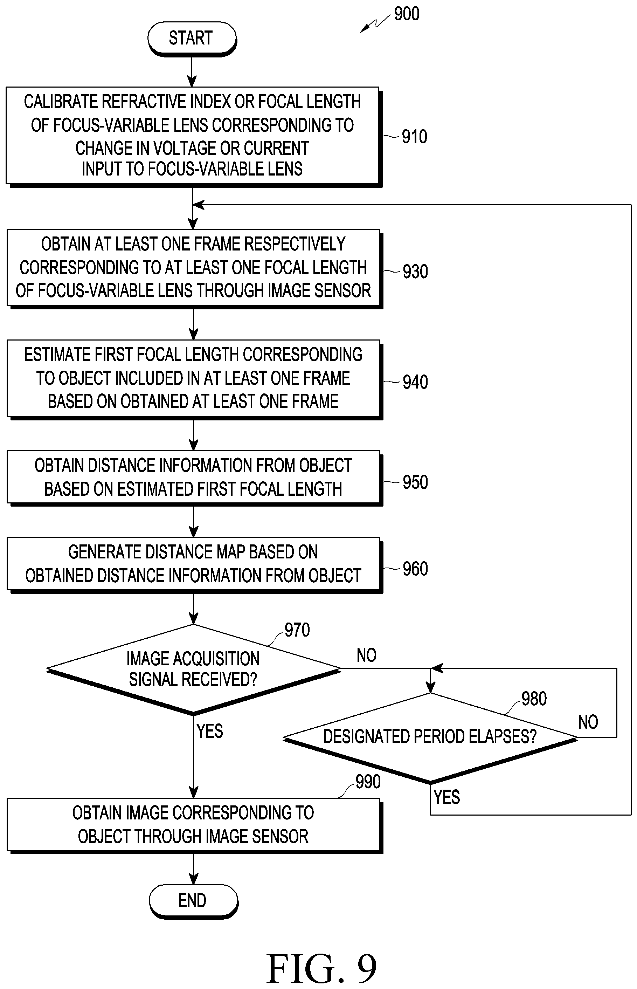

FIG. 9 is a flowchart 900 illustrating a method for operating an electronic device according to an embodiment of the disclosure.

Referring to FIG. 9, In operation 910, according to an embodiment ,the electronic device (e.g., the electronic device 101 or the processor 120 of FIG. 1) may calibrate the refractive index or focal length of the focus-variable lens, corresponding to a voltage or current input to the focus-variable lens (e.g., the focus-variable lens 280 of FIG. 2A). In an embodiment, the electronic device may pre-store the refractive index or focal length of the focus-variable lens, corresponding to the voltage or current input to the focus-variable lens, and calibrate the stored data.

In an embodiment, the electronic device may obtain the refractive index or focal length of the focus-variable lens which has the proper focus corresponding to the distance from a designated object, and obtain a voltage or current input to the focus-variable lens in the properly focused state on the object, calibrating the voltage or current input to the focus-variable lens corresponding to the refractive index or focal length of the focus-variable lens.

In an embodiment, the calibration operation may be performed in advance when manufacturing the electronic device or the focus-variable lens, and calibrate the refractive index or focal length of the focus-variable lens corresponding to the voltage or current input to the focus-variable lens based on the distance from the designated object using a separate device or with a specific condition set.

According to an embodiment, the electronic device may pre-store the distance information from the object corresponding to the voltage or current input to the focus-variable lens. According to an embodiment, the electronic device may calculate the distance information based on the pre-stored refractive index or focal length of the focus-variable lens corresponding to the voltage or current input to the focus-variable lens, and store the result in advance. According to an embodiment, when calibrating the refractive index or focal length of the focus-variable lens corresponding to the voltage or current input to the focus-variable lens, the electronic device may calibrate the distance information from the object corresponding to the voltage or current input to the focus-variable lens.

In operation 930, according to an embodiment, the electronic device may obtain at least one image frame respectively corresponding to at least one focal length of the focus-variable lens through an image sensor (e.g., the image sensor 290 of FIG. 2A).

In an embodiment, the electronic device may obtain at least one image frame by binning the image sensor. For example, the image sensor may obtain at least one image frame while being driven at a designated capturing speed (e.g., 1000 fps or more).

In an embodiment, the electronic device may vary the refractive index and/or the focal length of the focus-variable lens by varying the voltage input to the focus-variable lens. For example, the electronic device may vary the refractive index and/or focal length of the focus-variable lens by varying the voltage input to the focus-variable lens at designated intervals. In an embodiment, the electronic device may obtain a designated number (e.g., 10) of image frames using the image sensor while varying the voltage input to the focus-variable lens.

In operation 940, according to an embodiment, the electronic device may estimate a first focal length corresponding to an object included in the at least one frame based on the obtained at least one frame. In an embodiment, the object included in at least one frame may be obtained as an object of interest through image analysis, or may be obtained to correspond to the user's gaze direction or gesture.

In an embodiment, the electronic device may estimate the focal length for the object included in the image frame based on a designated number (e.g., 10) of image frames obtained using the image sensor. For example, the electronic device may identify a first image frame with a proper focus corresponding to the object among a plurality of image frames with different focal lengths and estimate the first focal length based on the voltage input to the focus-variable lens when obtaining the first image frame.

In an embodiment, the electronic device may identify whether it has a proper focus based on the phase difference between the image data respectively obtained through the focus-variable lens by the first photo diode and the second photo diode included in the image sensor in relation to identifying the first image frame having the proper focus corresponding to the object.

In operation 950, according to an embodiment, the electronic device may obtain distance information from the object based on the estimated first focal length. In an embodiment, the electronic device may calculate the object distance, which is the distance between the lens and the object, using the image distance in the properly focused state and the focal length of the lens.

In operation 960, according to an embodiment, the electronic device may generate a distance map based on the obtained distance information from the object. For example, at least one object may be included in the field of view (FOV) of the image sensor or at least one image frame obtained by the image sensor. In an embodiment, the electronic device may obtain distance information respectively corresponding to at least one object, and generate a distance map using the distance information corresponding to the position of each object.

In operation 970, according to an embodiment, the electronic device may determine whether an image acquisition signal is received. Here, the image acquisition signal is a signal for obtaining an image or video through the image sensor, and may be based on an input signal input by the user, or may be based on when a designated condition in which an image or video is required is met.

According to an embodiment, when the image acquisition signal is not received, the electronic device may determine whether a designated period elapses in operation 980 and, when the designated period elapses, obtain at least one frame in operation 930. Here, the designated period may be set to, e.g., 1 [sec].

In operation 990, according to an embodiment, when receiving an image acquisition signal, the electronic device may obtain an image corresponding to an object through the image sensor. Here, the image may be at least one image frame, or may be an image obtained by synthesizing the obtained at least one image frame or an image in which at least one image frame is consecutively played.

In an embodiment, the image corresponding to the object may be an image that is properly focused on the object by being obtained based on the focal length corresponding to the object. In an embodiment, the image corresponding to the object may be a color image including color information about the object.

According to an embodiment of the disclosure, an electronic device 101; 200 may comprise a focus-variable lens 280, an image sensor 290 configured to obtain an image frame of light incident through the focus-variable lens 280, and at least one processor 120 operatively connected to the focus-variable lens 280 and the image sensor 290. The at least one processor 120 may be configured to obtain at least one image frame respectively corresponding to at least one focal length of the focus-variable lens 280 through the image sensor 290.

The at least one processor 120 may be configured to estimate a first focal length corresponding to an object O1, O2, O3 included in the at least one image frame based on the obtained at least one image frame. The at least one processor 120 may be configured to obtain distance information from the object O1, O2, O3 based on the estimated first focal length.

In the electronic device 101; 200 according to an embodiment, the focus-variable lens 280 may be a lens having a focal length variable based on a change in an input voltage or current.

In the electronic device 101; 200 according to an embodiment, the at least one processor 120 may be configured to, as at least part of obtaining the at least one image frame, obtain the at least one image frame while changing the voltage or current input to the focus-variable lens 280.

In the electronic device 101; 200 according to an embodiment, the at least one processor 120 may be configured to, as at least part of estimating the first focal length, estimate the first focal length based on the voltage or current input to the focus-variable lens 280 corresponding to a first image frame among the obtained at least one image frame.

In the electronic device 101; 200 according to an embodiment, the image sensor 290 may include a plurality of photo diodes 291, 292. The at least one processor 120 may be configured to, as at least part of estimating the first focal length, estimate the first focal length based on a phase difference in data obtained from the plurality of photo diodes 291, 292 of the image sensor 290.

In the electronic device 101; 200 according to an embodiment, the at least one processor 120 may be configured to, as at least part of estimating the first focal length, estimate a focal length corresponding to a first image frame having the minimized phase difference among the obtained at least one image frame, as the first focal length.

In the electronic device 101; 200 according to an embodiment, the at least one processor 120 may be configured to, as at least part of estimating the first focal length, estimate the first focal length based on the voltage or current input to the focus-variable lens 280 when obtaining the first image frame.

In the electronic device 101; 200 according to an embodiment, the at least one processor 120 may be configured to, as at least part of obtaining the distance information from the object O1, O2, O3, update the distance information from the object O1, O2, O3 based on a designated period.

In the electronic device 101; 200 according to an embodiment, the at least one processor 120 may be configured to, as at least part of obtaining the distance information from the object O1, O2, O3, obtain the distance information from the object O1, O2, O3 based on pre-stored distance information from the object O1, O2, O3 corresponding to the voltage or current input to the focus-variable lens 280.

In the electronic device 101; 200 according to an embodiment, the at least one processor 120 may be configured to, when obtaining an image acquisition signal, obtain an image corresponding to the object O1, O2, O3 through the image sensor 290 based on the obtained distance information from the object O1, O2, O3.

According to an embodiment of the disclosure, an electronic device 101; 200 may comprise a focus-variable lens 280 and an image sensor 290 obtaining an image frame of light incident through the focus-variable lens 280. According to an embodiment, the method for operating the electronic device 101; 200 may comprise obtaining 930 at least one image frame respectively corresponding to at least one focal length of the focus-variable lens 280 through the image sensor 290. according to an embodiment, the method for operating the electronic device 101; 200 comprise estimating 940 a first focal length corresponding to an object O1, O2, O3 included in the at least one image frame based on the obtained at least one image frame. According to an embodiment, the method for operating the electronic device 101; 200 may comprise obtaining 950 distance information from the object O1, O2, O3 based on the estimated first focal length.

In the method for operating the electronic device 101; 200 according to an embodiment, the focus-variable lens 280 may be a lens having a focal length variable based on a change in an input voltage or current.

In the method for operating the electronic device 101; 200 according to an embodiment, obtaining the at least one image frame may be obtaining the at least one image frame while changing the voltage or current input to the focus-variable lens 280.

In the method for operating the electronic device 101; 200 according to an embodiment, estimating the first focal length may be estimating the first focal length based on the voltage or current input to the focus-variable lens 280 corresponding to a first image frame among the obtained at least one image frame.

In the method for operating the electronic device 101; 200 according to an embodiment, the image sensor 290 may include a plurality of photo diodes 291, 292. Estimating 940 the first focal length may be estimating the first focal length based on a phase difference in data obtained from the plurality of photo diodes 291, 292 of the image sensor 290.

In the method for operating the electronic device 101; 200 according to an embodiment, estimating the first focal length may be estimating a focal length corresponding to a first image frame having the minimized phase difference among the obtained at least one image frame, as the first focal length.

In the method for operating the electronic device 101; 200 according to an embodiment, estimating the first focal length may be estimating the first focal length based on the voltage or current input to the focus-variable lens 280 when obtaining the first image frame.

In the method for operating the electronic device 101; 200 according to an embodiment, obtaining the distance information from the object O1, O2, O3 may be updating the distance information from the object O1, O2, O3 based on a designated period.

In the method for operating the electronic device 101; 200 according to an embodiment, obtaining the distance information from the object O1, O2, O3 may be obtaining the distance information from the object O1, O2, O3 based on pre-stored distance information from the object O1, O2, O3 corresponding to the voltage or current input to the focus-variable lens 280.

The method for operating the electronic device 101; 200 according to an embodiment may further comprise, when receiving an image acquisition signal, obtaining an image corresponding to the object O1, O2, O3 through the image sensor 290 based on the obtained distance information from the object O1, O2, O3.

A non-transitory computer-readable storage medium storing one or more programs according to an embodiment of the disclosure may comprise operating the electronic device 101; 200 according to an embodiment may comprise obtaining 930 at least one image frame respectively corresponding to at least one focal length of the focus-variable lens 280 through the image sensor 290, based on execution of an application. The storage medium according to an embodiment may comprise estimating a first focal length corresponding to an object O1, O2, O3 included in the at least one image frame based on the obtained at least one image frame. The storage medium according to an embodiment may comprise obtaining distance information from the object O1, O2, O3 based on the estimated first focal length.

The electronic device according to an embodiment may be one of various types of electronic devices. The electronic devices may include, for example, a portable communication device (e.g., a smart phone), a computer device, a portable multimedia device, a portable medical device, a camera, an electronic device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1.  An electronic device (101; 200) comprising:

    a focus-variable lens (280);
    an image sensor (290) configured to obtain an image frame of light incident through the focus-variable lens (280); and
    at least one processor (120) operatively connected to the focus-variable lens (280) and the image sensor (290), wherein the at least one processor (120) is configured to:

    obtain at least one image frame respectively corresponding to at least one focal length of the focus-variable lens (280) through the image sensor (290);
    estimate a first focal length corresponding to an object (O1, O2, O3) included in the at least one image frame based on the obtained at least one image frame; and
    obtain distance information from the object (O1, O2, O3) based on the estimated first focal length.

2.  The electronic device (101; 200) of claim 1, wherein the focus-variable lens (280) is a lens having a focal length variable based on a change in an input voltage or current.

3.  The electronic device (101; 200) of claim 2, wherein the at least one processor (120) is configured to, as at least part of obtaining the at least one image frame, obtain the at least one image frame while changing the voltage or current input to the focus-variable lens (280).

4. The electronic device (101; 200) of claim 2 or 3, wherein the at least one processor (120) is configured to, as at least part of estimating the first focal length, estimate the first focal length based on the voltage or current input to the focus-variable lens (280) corresponding to a first image frame among the obtained at least one image frame.

5. The electronic device (101; 200) of any one of claims 1 to 4, wherein the image sensor (290) includes a plurality of photo diodes (291, 292), and wherein the at least one processor (120) is configured to, as at least part of estimating the first focal length, estimate the first focal length based on a phase difference in data obtained from the plurality of photo diodes (291, 292) of the image sensor (290).

6. The electronic device (101; 200) of claim 5, wherein the at least one processor (120) is configured to, as at least part of estimating the first focal length, estimate a focal length corresponding to a first image frame having the minimized phase difference among the obtained at least one image frame, as the first focal length.

7. The electronic device (101; 200) of claim 6, wherein the at least one processor (120) is configured to, as at least part of estimating the first focal length, estimate the first focal length based on the voltage or current input to the focus-variable lens (280) when obtaining the first image frame.

8. The electronic device (101; 200) of any one of claims 1 to 7, wherein the at least one processor (120) is configured to, as at least part of obtaining the distance information from the object (O1, O2, O3), update the distance information from the object (O1, O2, O3) based on a designated period.

9. The electronic device (101; 200) of any one of claims 1 to 8, wherein the at least one processor (120) is configured to, as at least part of obtaining the distance information from the object (O1, O2, O3), obtain the distance information from the object (O1, O2, O3) based on pre-stored distance information from the object (O1, O2, O3) corresponding to the voltage or current input to the focus-variable lens (280).

10. The electronic device (101; 200) of any one of claims 1 to 9, wherein the at least one processor (120) is configured to, when obtaining an image acquisition signal, obtain an image corresponding to the object (O1, O2, O3) through the image sensor (290) based on the obtained distance information from the object (O1, O2, O3).

11. A method for operating an electronic device (101; 200) including a focus-variable lens (280) and an image sensor (290) obtaining an image frame of light incident through the focus-variable lens (280), the method comprising:

obtaining (930) at least one image frame respectively corresponding to at least one focal length of the focus-variable lens (280) through the image sensor (290);
estimating (940) a first focal length corresponding to an object (O1, O2, O3) included in the at least one image frame based on the obtained at least one image frame; and
obtaining (950) distance information from the object (O1, O2, O3) based on the estimated first focal length.

12. The method of claim 11, wherein the focus-variable lens (280) is a lens having a focal length variable based on a change in an input voltage or current.

13. The method of claim 12, wherein obtaining (930) the at least one image frame obtains the at least one image frame while changing the voltage or current input to the focus-variable lens (280).

14. The method of claim 12 or 13, wherein estimating (940) the first focal length estimates the first focal length based on the voltage or current input to the focus-variable lens (280) corresponding to a first image frame among the obtained at least one image frame.

15. The method of any one of claims 11 to 14, wherein the image sensor (290) includes a plurality of photo diodes (291, 292), and wherein estimating (940) the first focal length estimates the first focal length based on a phase difference in data obtained from the plurality of photo diodes (291, 292) of the image sensor (290).

FIG. 1

EP 4 598 011 A1

101

253

280

FOCUS-VARIABLE LENS

120

290

PROCESSOR

IMAGE SENSOR

285

CONTROL CIRCUIT

# FIG. 2A

FIG. 2B

FIG. 2C

FIG. 3A

0V

L

320

330

350

340

311

# FIG. 3B

30V

L

320

330

340

350

311

# FIG. 3C

## FIG. 4

FIG. 5

FIG. 6

291

280

292

Phase
difference ($X_1$)

Front
focus

## FIG. 7A

291

280

292

Phase
difference ($X_0$)

Proper
focus

## FIG. 7B

# FIG. 7C

FIG. 8

900

START

CALIBRATE REFRACTIVE INDEX OR FOCAL LENGTH OF FOCUS-VARIABLE LENS CORRESPONDING TO CHANGE IN VOLTAGE OR CURRENT INPUT TO FOCUS-VARIABLE LENS — 910

OBTAIN AT LEAST ONE FRAME RESPECTIVELY CORRESPONDING TO AT LEAST ONE FOCAL LENGTH OF FOCUS-VARIABLE LENS THROUGH IMAGE SENSOR — 930

ESTIMATE FIRST FOCAL LENGTH CORRESPONDING TO OBJECT INCLUDED IN AT LEAST ONE FRAME BASED ON OBTAINED AT LEAST ONE FRAME — 940

OBTAIN DISTANCE INFORMATION FROM OBJECT BASED ON ESTIMATED FIRST FOCAL LENGTH — 950

GENERATE DISTANCE MAP BASED ON OBTAINED DISTANCE INFORMATION FROM OBJECT — 960

970
IMAGE ACQUISITION SIGNAL RECEIVED?

NO

980
DESIGNATED PERIOD ELAPSES?

NO

YES

YES

990
OBTAIN IMAGE CORRESPONDING TO OBJECT THROUGH IMAGE SENSOR

END

FIG. 9

## INTERNATIONAL SEARCH REPORT

International application No.

**PCT/KR2023/016927**

### A. CLASSIFICATION OF SUBJECT MATTER

**H04N 13/236**(2018.01)i; **H04N 13/332**(2018.01)i; **H04N 25/704**(2023.01)i; **H04N 23/67**(2023.01)i; **H04N 23/54**(2023.01)i; **H04N 23/55**(2023.01)i; **H04N 13/322**(2018.01)i

According to International Patent Classification (IPC) or to both national classification and IPC

### B. FIELDS SEARCHED

Minimum documentation searched (classification system followed by classification symbols)

H04N 13/236(2018.01); G02B 3/14(2006.01); G02B 30/00(2020.01); G02B 7/04(2006.01); G02B 7/10(2006.01); G02C 7/06(2006.01); G06T 17/00(2006.01); H04N 5/232(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 가변 초점 렌즈(variable focus lens), 안경(glasses), 거리(distance), 전압(voltage)

### C. DOCUMENTS CONSIDERED TO BE RELEVANT

| Category* | Citation of document, with indication, where appropriate, of the relevant passages | Relevant to claim No. |
|---|---|---|
| Y | JP 2021-196426 A (ITOCHU TECHNO-SOLUTIONS CORP.) 27 December 2021 (2021-12-27) See paragraphs [0001]-[0109]; claims 1-6; and figures 1-18. | 1-15 |
| Y | US 2021-0294071 A1 (ZEBRA TECHNOLOGIES CORPORATION) 23 September 2021 (2021-09-23) See paragraphs [0026]-[0073]; and claims 1-36. | 1-15 |
| A | KR 10-1789357 B1 (MICROSOFT CORPORATION) 23 October 2017 (2017-10-23) See claims 1-13. | 1-15 |
| A | KR 10-2020-0136297 A (SAMSUNG ELECTRONICS CO., LTD.) 07 December 2020 (2020-12-07) See claims 1-21. | 1-15 |
| A | KR 10-2021-0004776 A (SAMSUNG ELECTRONICS CO., LTD.) 13 January 2021 (2021-01-13) See claims 1-25. | 1-15 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **18 January 2024** | **01 February 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/016927**

| Patent document cited in search report | | | Publication date (day/month/year) | Patent family member(s) | | | Publication date (day/month/year) |
|---|---|---|---|---|---|---|---|
| JP | 2021-196426 | A | 27 December 2021 | None | | | |
| US | 2021-0294071 | A1 | 23 September 2021 | CN | 115552331 | A | 30 December 2022 |
| | | | | DE | 212021000344 | U1 | 14 December 2022 |
| | | | | EP | 4121818 | A1 | 25 January 2023 |
| | | | | GB | 2608763 | A | 11 January 2023 |
| | | | | JP | 2023-518256 | A | 28 April 2023 |
| | | | | KR | 10-2022-0154794 | A | 22 November 2022 |
| | | | | US | 11221461 | B2 | 11 January 2022 |
| | | | | WO | 2021-188995 | A1 | 23 September 2021 |
| KR | 10-1789357 | B1 | 23 October 2017 | CA | 2815526 | A1 | 24 May 2012 |
| | | | | CN | 102445756 | A | 09 May 2012 |
| | | | | CN | 102445756 | B | 14 January 2015 |
| | | | | EP | 2641392 | A1 | 25 September 2013 |
| | | | | EP | 2641392 | B1 | 31 December 2014 |
| | | | | IL | 225874 | A | 27 June 2013 |
| | | | | JP | 2014-505897 | A | 06 March 2014 |
| | | | | JP | 5908491 | B2 | 26 April 2016 |
| | | | | KR | 10-2013-0126623 | A | 20 November 2013 |
| | | | | US | 2016-0189432 | A1 | 30 June 2016 |
| | | | | US | 9304319 | B2 | 05 April 2016 |
| | | | | WO | 2012-067832 | A1 | 24 May 2012 |
| KR | 10-2020-0136297 | A | 07 December 2020 | CN | 113711107 | A | 26 November 2021 |
| | | | | EP | 3818431 | A1 | 12 May 2021 |
| | | | | US | 11467370 | B2 | 11 October 2022 |
| | | | | US | 2020-0379214 | A1 | 03 December 2020 |
| | | | | WO | 2020-242085 | A1 | 03 December 2020 |
| KR | 10-2021-0004776 | A | 13 January 2021 | CN | 113892050 | A | 04 January 2022 |
| | | | | EP | 3914959 | A1 | 01 December 2021 |
| | | | | US | 11061238 | B2 | 13 July 2021 |
| | | | | US | 2021-0003848 | A1 | 07 January 2021 |
| | | | | WO | 2021-002641 | A1 | 07 January 2021 |

Form PCT/ISA/210 (patent family annex) (July 2022)